# EUROPEAN PATENT SPECIFICATION

(11) **EP 0 422 182 B1**
(45) Date of publication and mention of the grant of the patent: **14.12.1994**
(21) Application number: 90906424.8
(22) Date of filing: 03.04.1990
(51) Int. Cl.: G01B 21/02

(54) **A DEVICE FOR MEASURING THE LENGTH OF A CONTACT SURFACE**
ANORDNUNG ZUR MESSUNG DER LÄNGE EINER KONTAKTOBERFLÄCHE
DISPOSITIF POUR MESURER LA LONGUEUR D'UNE SURFACE DE CONTACT

(30) Priority: 10.04.1989 SE 8901273
(43) Date of publication of application: 17.04.1991
(73) Proprietor: JIMEK INTERNATIONAL AB, S-200 21 Malmö (SE)
(72) Inventor: CRONVALL, Leif, S-270 57 Kivik (SE)
(74) Representative: Petri, Stellan
(86) International application number: SE9000220
(87) International publication number: WO9012283

(56) References cited:
- WO-A-88/00326
- WO-A-88/04027
- GB-A- 2 065 888
- SE-B- 410 521
- Patent Abstracts of Japan, vol. 10, no. 147, P-460, abstract of JP-A-61702 6 January 1986

## Description

A device for measuring the spacial extension of the abutment surface between two mutually adjacent bodies, which bodies may either both be movable, or solely one of said bodies may be movable, or both of said bodies may be stationary, and which bodies, at and adjacent the abutment surface, are both compressible or solely one of said bodies is compressible, and have mutually facing surfaces which are either both single-curved or double-curved or the one is single- or double-curved and the other planar.

The invention also refers to a method for determining the abutment pressure of two mutually abutting bodies.

### Background Art

There are a number of contexts in which reason is found to measure the extension or length of an abutment surface between two mutually adjacent bodies, of which at least one is compressible. Such contexts are found in mutually rotating rolls, rocking rolls or intermittently abutting rolls, which may be cylindrical or conical, straight or cambered and have parallel or offset longitudinal axes. The context concerned may also be one in which a roll of the aforesaid kind lies continuously or intermittently against a flat surface. Bodies of the aforesaid kind are found, inter alia, in several types of roll constructions, for instance laminating equipment, paper machines and printing presses. The mutually abutting bodies may have smooth or patterned surfaces. The invention is particularly suitable for application in printing presses.

It is important in the case of roll arrangements to accurately sense and control the pressure acting between the rolls or between a roll and a flat surface, thereby to control, inter alia, spreading of ink or some other liquid transferred between the bodies or to control the layer thickness of said ink or liquid. The aforesaid abutment surface is a measurement of this pressure. It is of particular interest to measure the length extension of the abutment surface at right angles to the longitudinal axis of the roll or rolls.

Hitherto, no simple and reliable devices or methods are available for measuring either the pressure between the rolls or the length or spacial extension of the abutment surface.

One method known within the printing industry is to stop two counter-rotating liquid-laden rolls and then rotate the rolls slowly through part of one revolution. This results in a visible stripe in the liquid layer of the rolls, this stripe deriving from the aforesaid stationary state and the width of said stripe constituting the extension of the abutment surface perpendicular to the longitudinal axis of the rolls. This method is time consuming and the accuracy with which the width of the stripe is measured is small, and the method cannot be used with rolls to which no liquid is applied or to which only transparent liquid, such as water, is applied.

Another method used within the printing industry involves introducing a strip of paper or foil between slowly rotating rolls and, when the rolls have stopped, withdrawing one of the strips and judging by experience the value of the roll pressure or the extension of the abutment surface. This method is unreliable and cannot be repeated independently of the operator. None of the aforesaid methods can be applied suitably on rolls which are difficult to reach or rolls situated in poor light conditions or in dirty environments. The simple method, conceivable in practice, of introducing, for instance, a paper sheet into the roll nip, pressing the rolls towards one another, separating the rolls and reading the abutment imprint on the paper cannot be carried out in practice, since the rolls concerned are most often in fixed positions.

The document of Patents Abstracts of Japan, Vol. 10, 147, P460, abstract of JP 61-702, publ 1986-01-06 SUMITOMO DENKI KOGYO K.K teaches a flexible sensor which is attached to a body and by means of which contact between said body and another body can be detected. This sensor is able to disclose whether such contact exists, practically along the whole length of the sensor. The sensor is primarily intended for detecting contact between various parts in an automated manufacturing process, for instance between an industrial robot and components co-acting therewith, and is unable to measure the geometric extension of the abutment surface between two bodies, and consequently cannot be used for the purpose of this invention.

### The Object of the Invention and the Most Important Characterizing Features Thereof

The drawbacks of the aforesaid methods are avoided by the inventive device in that the device includes a measurement-value indicating means and a pressure-sensitive sensor, which is connected to said means and which is inserted between said abutting bodies, the sensor comprising two elongate first members and one second member, which is pressed against said first members, and giving a measurement of the spacial extension of the abutment surface in its longitudinal direction.

The inventive feature of the new method follows from the attaced claim 8.

The invention will be described in more detail in the following with reference to a number of preferred exemplifying embodiments thereof and with reference to the accompanying drawings. Similar components in the various Figures of the drawings are identified with mutually the same reference signs.

Figure 1 is a cross-sectional view of two mutually adjacent cylinders, both of which are compressible, in which the reference numeral 1 identifies the length or spacial extension of the abutment surface perpendicularly to the longitudinal axis of the cylinders.

Figure 2 is a cross-sectional view of two mutually adjacent cylinders, of which one is compressible and the other non-compressible.

Figure 3 is a cross-sectional view of a compressible cylinder which abuts a non-compressible flat surface.

Figure 4 is a cross-sectional view of a non-compressible cylinder which abuts a compressible flat surface.

Figure 5 is a cross-sectional view of one of a number of further instances in which two bodies having curved surfaces have a common abutment surface, in this case a non-compressible sphere in abutment with a compressible body having a dish-shaped surface.

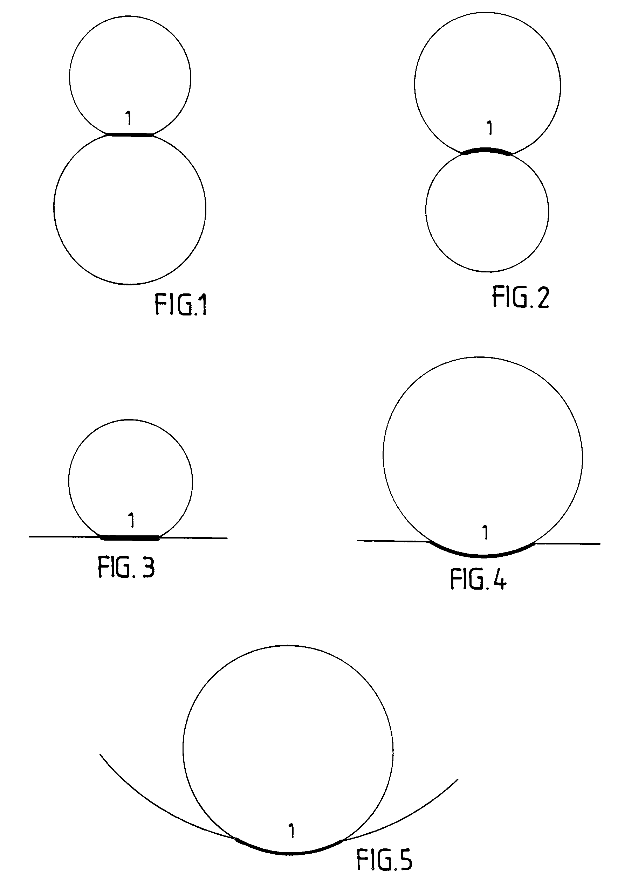

In all embodiments illustrated in Figures 1-5, the two bodies can be either movable or immovable relative to one another. Furthermore, the illustrated special extension 1 can vary along the extensions of respective abutting bodies at the surface of mutual contact.

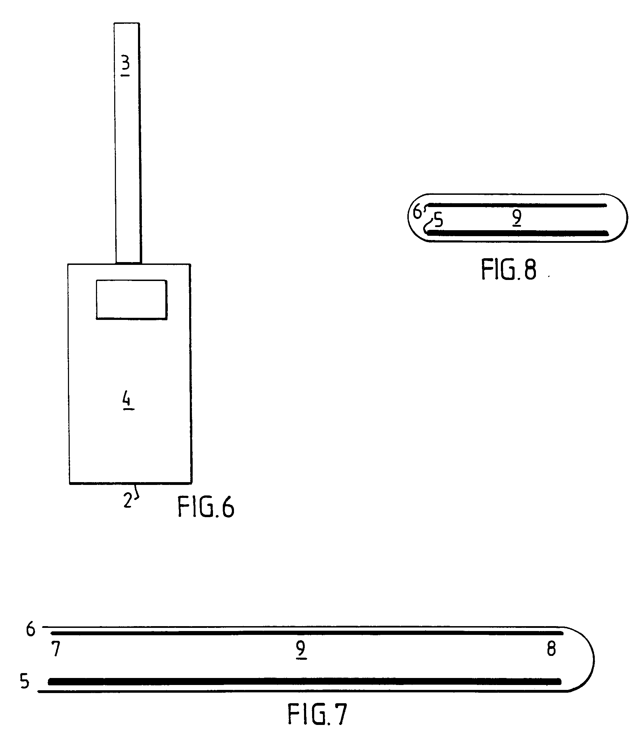

Figure 6 illustrates an inventive contact-length meter 2 provided with a sensor 3 and measurement-value indicating means 4.

Figure 7 is a longitudinal, cross-sectional view taken in the thickness-direction of the sensor 3 according to one embodiment. The sensor of this embodiment comprises an elongated, electrically short-circuiting element 5, an elongated electrically-resistive element 6 having a well-defined geometric pattern with end points 7 and 8, and a non-conductive spacer element 9 which is slotted along its length and placed between said two elements.

Figure 8 is a sectional view of the sensor 3 shown in Figure 7, taken at right angles to the longitudinal axis of the sensor.

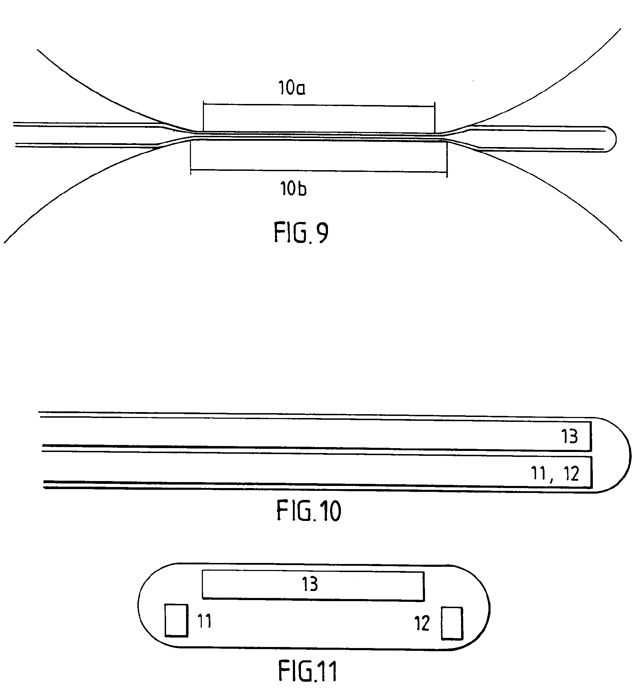

Figure 9 illustrates an example of the use of the contact-length meter 2, namely a use in which the sensor 3 illustrated in Figure 7 and 8 is introduced in between two mutually abutting rolls, by rotation of the rolls. Because, inter alia the sensor 3 has a given thickness in the order of some tens of a millimeter, the length 10b of the element 5 which is activated and measuringly operative during said abutment will deviate slightly from the true spacial extension 10a of the abutment surface, to which corrections are made with a correction factor including, inter alia, the relation of the thickness of the sensor 3 to the respective radii of the two cylinders. If the cyliders are exchanged for other bodies, the correction factor will be contingent on the radii of curvature of said bodies at the abutment surface.

Figure 10 is a longitudinal cross-section through the width of another embodiment of the sensor, this sensor comprising two mutually parallel, elongated light guides 11 and 12, and an elongated, light-impermeable element 13 which extends parallel with said light guides. The light guides 11 and 12 are only permeable to light at the short-ends thereof at which they are attached to the measurement-value indicating means 4, and at the mutually facing, long surfaces of said guides. The remaining surfaces of the light guides are more or less reflective.

Figure 11 is a sectional view of the sensor 3 shown in Figure 10, at right angles to the longitudinal direction of the sensor 3.

When carrying out a measuring operation, the sensor 3 is introduced between the two bodies in any one of Figures 1-5, to an extent such that the end of the sensor 3 distal from the measurement-value indicating means 4 will have passed the mutual abutment surface of the bodies.

When taking measurements with the aid of the sensor 3 illustrated in Figures 7 and 8, the short-circuiting element 5 is pressed through a slot in the spacer element 9, into contact with the resistive element 6 along a path constituted essentially by the spacial extension of the abutment surface between the bodies in the longitudinal direction of the sensor 3. It is possible with the aid of known technique to readily measure the resistance between the terminal or end points 7 and 8, on the one hand in the absence of abutment of said bodies and on the other when the sensor 3 is inserted between the bodies, wherewith in this latter case the resistance will fall as a result of the short-circuiting element 5 being pressed along a part of its length towards and against the resistive element 6, this resistance providing a measurement of said extension. An advantage is afforded when the resistive element (6) consists of a very thin, copper wire which is disposed in closely adjacent and mutually parallel continuous loops of mutually equal lengths, these loops being positioned perpendicularly to the longitudinal direction of the resistive element (6).

It will be understood that the aforesaid sensor can be modified for use with capacitive measuring processes.

When the sensor 3 has the form illustrated in Figures 10 and 11, light is transmitted from the measuring-value indicating means 4 through the light guide 11, this light, when the sensor 3 is not subjected to load from said bodies, reaching the light guide 12, which returns the light to the indicating means 4. On the other hand, when the sensor 3 is placed between mutually abutting bodies, the light-impermeable element 13 is pressed in between the light guides 11 and 12 and screens the transfer of light between said guides to an extent which corresponds to the spacial extension of the abutment surface. The value of this screening effect can be readily measured with the aid of the measuring-value indicating means 4, using known techniques.

In order to enable the sensor 3 to be used readily and reliably in an industrial environment, said sensor will preferably be made from a tough and stretch-durable material. The measurement-value indicating means 4 is provided with means for analog or digital presentation of measuring values, for manual or automatic locking of measured values, for signalling that the measuring process is completed and may also incorporate illumination means. The measurement-value indicating means 4 may readily incorporate the aforesaid facility for correcting measured values of the abutment-surface extension to correct values, described with reference to Figure 9.

It will be understood that the aforedescribed contact-length meter 2 can be used for calculating the abutment pressure between two bodies on the basis of measured values relating to the spacial extension of the abutment surface, the radius of curvature of respective bodies and their respective compressiblity.

## Claims

1. A device for measuring (2) the spacial extension of the abutment surface between two mutually adjacent bodies, which bodies may either both be movable, or solely one of said bodies may be movable, or both of said bodies may be stationary, and which bodies, at and adjacent the abutment surface, are both compressible or solely one of said bodies is compressible, and have mutually facing surfaces which are either both single-curved or double-curved or the one is single- or double-curved and the other planar, **characterized** in that the device includes a measurement-value indicating means (4) and a pressure-sensitive sensor (3), which is connected to said means and which is inserted between said abutting bodies, the sensor (3) comprising two elongate first members and one second member, which is pressed against or between said first members, and giving a measurement of the spacial extension of the abutment surface in its longitudinal direction.

2. A device according to Claim 1, **characterized** in that the ssensor (3) has provided along essentially the whole of its length an electrically short-circuiting element (5), and electrically resistive element (6) extending parallel with said element (5) and having terminal or end points (7, 8), and a non-conductive, slotted spacer element (9) positioned between said elements, said short-circuiting element (5) being pressed through said slot against the resistive element (6) along substantially the whole extension of the abutment surface, wherein the resultant change in the resistance between the points (7, 8) measured by the measurement value indicating means (4) constitutes a measurement of the spacial extension of said abutment surface.

3. A device according to Claim 2, **characterized** in that the resistive element (6) is a very thin copper wire, which is disposed in closely adjacent and mutually parallel continuous loops of mutually equal lengths; and in that the loops are positioned perpendicularly to the longitudinal axis of the resistive element (6).

4. A device according to Claim 1, **characterized** in that extending substantially along the whole length of the sensor (3) are two mutually parallel light guides (11, 12), which are connected to the measurement-value indicating means (4) and which are permeable to light solely through mutually facing surfaces and surfaces facing the indicating means (4); in that extending parallel with said light guides is a light-impermeable element (13), which is pressed in between the light guides (11, 12) essentially along the whole extension of the abutment surface, wherein the light transmitted from the measurement-value indicating means (4) to one of the light guides (11) and from said light guide to the other light guide (12) and from said light guide back to the measurement-value indicating means (4) decreases to an extent which constitutes a measurement of the spacial extension of said abutment surface.

5. A device according to Claim 1, **characterized** in that the sensor (3) includes a capacitive primary element, the change in capacitance of which when in abutment with the bodies measured by the measurement-value indicating means (4) constitutes a measurement of the spacial extension of said abutment surface.

6. A device according to any one of the preceding Claims, **characterized** in that correction of the measured spacial extension of the abutment surface to a correct value is effected manually or automatically in the measurement-value indicating means (4) with the aid of values inserted in said means relating to the thickness of the sensor (3) and the radius of curvature of respective mutually abutting bodies at said abutment surface.

7. A device according to any one of the preceding Claims, **characterized** in that the measurement-value indicating means (4) is provided with a facility for manually or automatically locking the measured values, signalling that the measuring operation is completed, and also for illuminating the measurement-value display.

8. A method for determining the abutment pressure of two mutually abutting bodies wherein a pressure-sensitive and spacial extension measuring sensor (3) of a device according to any of the preceding Claims is inserted between said bodies and subsequently the abutment pressure is calculated as a function of the spacial extension of the abutment surface between said bodies, as measured by the sensor (3), the radius of curvature of respective bodies, and the compressibility of respective bodies at the abutment surface.

## Patentansprüche

1. Vorrichtung (2) zum Messen der räumlichen Ausdehnung der Stoßoberfläche zwischen zwei gegenseitig benachbarten Körpern, wobei die Körper entweder beide beweglich, oder lediglich einer der beiden Körper beweglich oder beide der Körper ortsfest sind und einander gegenüberliegende Oberflächen haben, die entweder beide einfach gekrümmt oder doppelt gekrümmt sind, oder von denen eine einfach gekrümmt oder doppelt gekrümmt und die andere eben ist, dadurch gekennzeichnet, daß die Vorrichtung eine Meßwertanzeigeeinrichtung (4) und einen druckempfindlichen Sensor (3) umfaßt, der an die Einrichtung angeschlossen und zwischen die aneinander stoßenden Körper eingesetzt ist, wobei der Sensor (3) zwei längliche erste Elemente und ein zweites Element hat, das gegen oder zwischen die ersten Elemente gedrückt ist und ein Maß für die räumliche Ausdehnung der Stoßoberfläche in ihrer Längsrichtung ergibt.

2. Vorrichtung nach Anspruch 1, dadurch gekennzeichnet, daß der Sensor (3) entlang im wesentlichen seiner gesamten Länge mit einem elektrischen Kurzschließelement (5) und mit einem elektrischen Widerstandselement (6), das parallel zum Element (5) verläuft und Anschluß- oder Entpunkte (7, 8) hat, und mit einem nicht leitfähigen, geschlitzten Abstandshalterelement (9) versehen ist, das zwischen den Elementen angeordnet ist, wobei das Kurzschließelement (5) durch den Schlitz gegen das Widerstandselement (6) entlang im wesentlichen der gesamten Ausdehnung der Stoßoberfläche gedrückt ist, wobei die resultierende Änderung des Widerstands zwischen den Punkten (7, 8), die durch die Meßwertanzeigeeinrichtung (4) gemessen wird, ein Maß für die räumliche Ausdehnung der Stoßoberfläche bildet.

3. Vorrichtung nach Anspruch 2, dadurch gekennzeichnet, daß das Widerstandselement 6 ein sehr dünner Kupferdraht ist, der in eng benachbarten und zueinander parallelen durchgehenden Schleifen gegenseitig gleicher Längen angeordnet ist, und daß die Schleifen lotrecht zu der Längsachse des Widerstandselements (6) angeordnet sind.

4. Vorrichtung nach Anspruch 1, dadurch gekennzeichnet, daß im wesentlichen entlang der gesamten Länge des Sensors (3) verlaufend zwei zueinander parallele Lichtleiter (11, 12) vorgesehen sind, die an die Meßwertanzeigeeinrichtung (4) angeschlossen und lediglich durch einander gegenüberliegende Oberflächen und der Anzeigeeinrichtung (4) gegenüberliegende Oberflächen lichtdurchlässig sind, und daß parallel zu den Lichtleitern verlaufend ein lichtundurchlässiges Element (13) vorgesehen ist, das zwischen die Lichtleiter (11, 12) im wesentlichen entlang der gesamten Ausdehnung der Stoßoberfläche hineingedrückt ist, wobei das Licht, das von der Meßwertanzeigeeinrichtung (4) zu einem der Lichtleiter (11) und von dem Lichtleiter zu dem anderen Lichtleiter (12) und von dem Lichtleiter zurück zu der Meßwertanzeigeeinrichtung (4) übertragen wird, auf ein Ausmaß abnimmt, das eine Messung der räumlichen Ausdehnung der Stoßoberfläche bildet.

5. Vorrichtung nach Anspruch 1, dadurch gekennzeichnet, daß der Sensor (3) ein kapazitives Primärelement umfaßt, dessen Kapazitätsänderung, wenn es sich in Stoßanlage mit den Körpern befindet, gemessen durch die Meßwertanzeigeeinrichtung (4) ein Maß für die räumliche Ausdehnung der Stoßoberfläche bildet.

6. Vorrichtung nach einem der vorangehenden Ansprüche, dadurch gekennzeichnet, daß eine Korrektur der gemessenen räumlichen Ausdehnung der Stoßoberfläche auf einen korrigierten Wert manuell oder automatisch in der Meßwertanzeigeeinrichtung (4) mit der Hilfe von Werten bewirkt wird, die in die Einrichtung, betreffend die Dicke des Sensors (3) und den Krümmungsradius jeweils aneinander anstoßender Körper an der Stoßoberfläche eingeführt werden.

7. Vorrichtung nach einem der vorangehenden Ansprüche, dadurch gekennzeichnet, daß die Meßwertanzeigeeinrichtung (4) mit einer Einrichtung zum manuellen oder automatischen Verriegeln der gemessenen Werte versehen ist, die signalisieren, daß der Meßvorgang beendet ist, und zusätzlich zur Beleuchtung der Meßwertanzeige.

8. Verfahren zum Bestimmen des Stoßdrucks zweier gegenseitig aneinanderstoßender Körper, bei dem ein druckempfindlicher und eine räumliche Ausdehnung messender Sensor (3) einer Vorrichtung gemäß einem der vorangehenden Ansprüche zwischen die Körper eingeführt, und bei dem darauffolgend der Stoßdruck als eine Funktion der räumlichen Ausdehnung der Stoßoberfläche zwischen den Körpern, gemessen durch den Sensor (3), des Krümmungsradius entsprechender Körper, und der Zusammendrückbarkeit entsprechender Körper an der Stoßoberfläche berechnet wird.

## Revendications

1. Dispositif pour mesurer (2) la longueur de la surface de contact entre deux corps mutuellement contigus, lesquels corps peuvent être soit tous les deux mobiles, soit seulement un desdits corps peut être mobile, soit les deux corps peuvent être fixes et lesquels corps, au niveau de et près de la surface de contact sont tous les deux compressibles ou seulement un desdits corps est compressible et ont des surfaces mutuellement en regard qui sont soit à une seule courbure, soit à double courbure ou l'un est à une seule courbure ou à double courbure et l'autre plan, caractérisé en ce que le dispositif comporte un moyen d'indication de valeur de mesure (4) et un capteur sensible à la pression (3) qui est relié audit moyen et qui est inséré entre lesdits corps en contact, le capteur (3) comprenant deux premiers éléments allongés et un second élément, lequel est pressé contre ou entre lesdits premiers éléments et donnant une mesure de la longueur de la surface de contact dans sa direction longitudinale.

2. Dispositif selon la revendication 1, caractérisé en ce que le capteur (3) a, prévu suivant essentiellement la totalité de sa longueur, un élément électriquement en court-circuit (5), un élément électriquement résistif (6) s'étendant parallèle audit élément (5) et ayant des points terminaux ou points d'extrémité (7, 8) et un élément d'écartement fendu, non conducteur (9) positionné entre lesdits éléments, ledit élément de court-circuit (5) étant pressé à travers ladite fente contre l'élément résistif (6) suivant pratiquement la longueur totale de la surface de contact, dans lequel le changement obtenu de la valeur ohmique entre les points (7, 8) mesuré par le moyen d'indication de valeur de mesure (4) constitue une mesure de la longueur de ladite surface de contact.

3. Dispositif selon la revendication 2, caractérisé en ce que l'élément résistif (6) est un fil de cuivre très mince qui est disposé en boucles continues très proches et mutuellement parallèles, de longueurs mutuellement égales et en ce que les boucles sont positionnées perpendiculairement à l'axe longitudinal de l'élément résistif (6).

4. Dispositif selon la revendication 1, caractérisé en ce que s'étendant pratiquement suivant la longueur totale du capteur (3) se trouvent deux guides de lumière mutuellement parallèles (11, 12) qui sont connectés au moyen d'indication de valeur de mesure (4) et qui sont perméables seulement à la lumière à travers des surfaces mutuellement en regard et les surfaces en regard du moyen d'indication (4), en ce que s'étendant parallèle auxdits guides de lumière se trouve un élément imperméable à la lumière (13) qui est pressé entre les guides de lumière (11, 12) essentiellement suivant la longueur totale de la surface de contact, dans lequel la lumière transmise à partir du moyen d'indication de valeur de mesure (4) vers un des guides de lumière (11) et à partir du guide de lumière vers l'autre guide de lumière (12) et revenant dudit guide de lumière vers le moyen d'indication de valeur de mesure (4) diminue d'une valeur qui constitue une mesure de la longueur de ladite surface de contact.

5. Dispositif selon la revendication 1, caractérisé en ce que le capteur (3) comporte un élément primaire capacitif dont le changement de capacité lorsqu'en contact avec les corps mesuré par le moyen d'indication de valeur de mesure (4) constitue une mesure de la longueur de ladite surface de contact.

6. Dispositif selon l'une quelconque des revendications précédentes, caractérisé en ce que la correction de cette longueur mesurée de la surface de contact à une valeur correcte est effectuée manuellement ou automatiquement dans le moyen d'indication de valeur de mesure (4) à l'aide de valeurs insérées dans ledit moyen se rapportant à l'épaisseur du capteur (3) et au rayon de courbure des corps respectifs mutuellement en contact à ladite surface de contact.

7. Dispositif selon l'une quelconque des revendications précédentes, caractérisé en ce que le moyen d'indication de valeur de mesure (4) est muni d'un dispositif pour mémoriser manuellement ou automatiquement les valeurs mesurées, signalant que l'opération de mesure est achevée et également pour éclairer l'affichage des valeurs de mesure.

8. Procédé pour déterminer la pression de contact de deux corps mutuellement en contact, dans lequel un capteur sensible à la pression et de mesure de distance (3) d'un dispositif selon l'une quelconque des revendications précédentes est inséré entre lesdits corps et ultérieurement la pression de contact est calculée comme une fonction de la longueur de la surface de contact entre lesdits corps, telle que mesurée par le capteur (3), du rayon de courbure des corps respectifs et de la compressibilité des corps respectifs à la surface de contact.
